(19) Europäisches Patentamt

European Patent Office

Office européen des brevets

(11) Veröffentlichungsnummer: **0 425 863 A1**

# (12) EUROPÄISCHE PATENTANMELDUNG

(21) Anmeldenummer: 90119573.5

(22) Anmeldetag: **12.10.90**

(51) Int. Cl.⁵: **C21D 9/28**

(30) Priorität: **02.11.89 DE 3936368**

(43) Veröffentlichungstag der Anmeldung:
**08.05.91 Patentblatt 91/19**

(84) Benannte Vertragsstaaten:
**DE ES FR GB IT**

(71) Anmelder: **GKN AUTOMOTIVE**
**AKTIENGESELLSCHAFT**
**Alte Lohmarer Strasse 59**
**W-5200 Siegburg(DE)**

Anmelder: **Jean Walterscheid Gesellschaft**
**mit beschränkter Haftung**
**Hauptstrasse 150**
**W-5204 Lohmar/Rhld. 1(DE)**

(72) Erfinder: **Riemscheid, Helmut**
**Heiligenstock 53**
**W-5204 Lohmar 21(DE)**
Erfinder: **Frielingsdorf, Herbert**
**Südstrasse 50a**
**W-5204 Lohmar(DE)**
Erfinder: **Greulich, Klaus, Dr.**
**Mühlenstrasse 1**
**W-5461 Breitscheid-Hollig(DE)**
Erfinder: **Lautsch, Paul**
**Grillenberg 4**
**W-2300 Kiel 14(DE)**

(74) Vertreter: **Neumann, Ernst Dieter, Dipl.-Ing.**
**HARWARDT NEUMANN PATENTANWÄLTE**
**Scheerengasse 2 Postfach 1455**
**W-5200 Siegburg(DE)**

(54) **Wärmebehandlung von Antriebswellen.**

㊗ Eine Antriebswelle für einen Antriebsstrang eines Kraftfahrzeuges, in Form einer Welle wird einem neuen Wärmebehandlungsverf ahren unterzogen, wobei eine insbesondere induktive Erwärmung des gesamten Querschnittes der Antriebswelle bis über die GOS-Linie im Eisen-Kohlenstoff-Diagramm und eine Abkühlung durch eine Wasser-oder Wasser-Emulsions-Dusche vorgenommen wird. Hierdurch wird eine Antriebswelle mit einer sehr günstigen Lastkapazitätsverteilung über den gesamten Querschnitt erzielt, die an der Oberfläche mindestens 90% der für den betreffenden Werkstoff erreichbaren Anspring-Härte aufweist und bis zu einer Eindringtiefe von 60% der Materialstärke mit minde- stens 90% der erreichten Oberflächen- härte durch- gehärtet ist und bei der der Restquerschnitt einen zunehmenden Anteil von Zwischenstufengefüge bis zum Rohrinnendurchmesser aufweist.

EP 0 425 863 A1

## WÄRMEBEHANDLUNG VON ANTRIEBSWELLEN

Die Erfindung betrifft Antriebswellen, insbesondere für einen Antriebsstrang eines Kraftfahrzeuges, die aus einem induktiv gehärteten Werkstoff besteht, sowie ein Verfahren zu deren Herstellung.

Antriebswellen im Kraftfahrzeugbau werden im Hauptantriebsstrang zwischen Getriebe und Differential als Welle bevorzugt als Rohrwelle eingesetzt.

Die Antriebswellen werden für hohe Belastungen dem Stand der Technik nach durch Induktion oder Einsatz gehärtet. Bei der Anwendung beider Verfahren wird eine gehärtete Randzone erzeugt, die im Bereich zwischen 2,5 bis 4,5 mm beim induktiven Härten bzw. bei 0,5 bis 1,2 mm beim Einsatzhärten liegt. Der Übergang von der gehärteten Randschicht nach innen erfolgt beim induktiven Härten in ein weiches Grundgefüge bzw. beim Einsatzhärten in ein schwach vergütetes Gefüge. Da das gehärtete Gefüge ein größeres Volumenwachstum als das Grundgefüge bzw. das vergütete Gefüge besitzt, wird die gehärtete Randzone zu einen Teil durch das nahezu volumenkonstante Restgefüge daran gehindert, die der Volumenszunahme entsprechende Geometrie anzunehmen. Hierdurch werden in der äußeren Randzone Druckspannungen erzeugt, die im gleichen Maße Zugsspannungen im Restquerschnitt erzeugen. Wird eine herkömmliche induktiv randschichtgehärtete Antriebswelle einer hohen Torsionsbelastung unterworfen, so liegt infolge der Spannungsverhältnisse über dem Wellenquerschnitt der kritische Bereich nicht in der gehärteten hochfesten Randschicht, sondern in der an die Härteschicht anschließenden Übergangszone, die aufgrund der Wärmebehandlung nur die Grundfestigkeit des Wellenwerkstoffes besitzt. Bei hoch belasteten einsatzgehärteten Antriebswellen liegt der Festigkeitssprung in der Übergangszone von der gehärteten Schicht (0,8 bis 1,2 mm stark) zum Restquerschnitt, der sogar vergütet sein kann, in einem Bereich wesentlich höherer Spannungen, so daß selbst bei vergütetem Restquerschnitt auch hier der kritische Bereich in dieser Übergangszone liegt. Bei derartig wärmebehandelten Antriebswellen ist infolge der fast sprungartigen Festigkeitsänderungen mehr oder weniger nahe dem Außendurchmesser der Welle eine der möglichen Werkstoffbelastung entsprechende Drehmomentübertragung speziell bei Wechsellast nicht erreichbar.

Der vorliegenden Erfindung liegt die Aufgabe zugrunde, eine Antriebswelle und ein Verfahren zu deren Herstellen bereitzustellen, mit der eine günstige Last-Kapazitäts-Verteilung über dem Wellenquerschnitt ermöglicht wird.

Die Lösung besteht erfindungsgemäß darin, daß der Werkstoff der Antriebswelle an der Oberfläche mindestens 90% der für den betreffenden Werkstoff erreichbaren Anspring-Härte aufweist und daß der Werkstoff bis zu einer Eindringtiefe von 60% der Materialstärke mit mindestens 90% der erreichten Oberflächenhärte durchgehärtet ist, wobei der Werkstoffbereich zwischen äußerer Schicht bis zum Wellenkern einen Härtegradienten von weniger als 50 HV/mm aufweist und aus einem Martensit-Gefüge mit einem zunehmenden Anteil von Troostit- oder Bainit-Gefüge besteht und daß der Restquerschnitt einen zunehmenden Anteil von Zwischenstufen-Gefüge bis zum Wellenkern aufweist und daß der Kohlenstoffgehalt des verwendeten Werkstoffes etwa 0,2 bis 0,5 % beträgt. Die sich ergebenden Vorteile zeichnen sich durch eine höhere Lastkapazität der Antriebswelle über den gesamten Querschnitt bei kleinerem Härtegrad und eine günstige Verformbarkeit des Werkstoffgefüges aus. Die äußere durchgehärtete Werkstoffschicht weist mindestens 90% der für den betreffenden Werkstoff erreichbaren Anspringhärte auf und der innere hochvergütete Werkstoffbereich zwischen äußerer Schicht bis zum Wellenkern besteht aus einem Martensit-Gefüge mit zunehmenden Anteil von Troostit- oder Bainit-Gefüge mit einem Härtegradienten von weniger als 50 HV/mm.

Der Kohlenstoffgehalt, des zu härtenden Werkstoffes liegt zwischen 0,2 - 0,50 %, wobei weitere Beimengungen von Mangan und/oder Chrom und/oder gleich wirkender Legierungselemente zum Werkstoff zu einer Absenkung des notwendigen Kohlenstoffgehaltes für das erfindungsgemäße Wärmebehandlungsverfahren führen. Damit ist das erfindungsgemäße Verfahren insbesondere für gehämmerte Antriebswellen mit reduzierter Wandstärke und verdickten Enden zur Aufnahme von Verzahnungen geeignet.

Der Werkstoff weist über den gesamten Querschnitt eine Spannungskapazität auf, die größer ist als die Spannungswerte der Welle unter maximaler Torsionsbelastung.

Die Lösung für das Verfahren liegt darin, daß eine Härtung der Antriebswelle durch induktive Erwärmung des gesamten Querschnittes bis über die GOS-Linie im Eisen-Kohlenstoff-Diagramm und eine Abkühlung durch eine Wasser- oder Wasser-Emulsions-Dusche vorgenommen wird.

Hierbei findet ein Werkstoff zur induktiven Aushärtung Verwendung, der im Hinblick auf den C-Gehalt normalerweise für das Einsatzhärten gebräuchlich ist und nach der Aushärtung an der Oberfläche mindestens 90% der für den betreffenden Werkstoff erreichbaren Anspringhärte aufweist und daß der Werkstoff bis zu einer Eindringtiefe von 60% der Materialstärke mit mindestens 90% der erreichbaren Oberflächenhärte durchgehärtet ist, und daß der Restquerschnitt einen zunehmenden Anteil von Vergütungsgefüge bis zum Rohrinnendurchmesser aufweist.

Nach diesem Verfahren wird eine Spannungskapazität erreicht, die einen verbesserten gleichmäßig abfallenden Verlauf über dem Querschnitt erzeugt und den tatsächlichen Spannungszuständen angenähert ist. Eine Erniedrigung der möglichen kritischen Abkühlgeschwindigkeit und eine Vergrößerung der Einhärtetiefe in der äußeren Wellenschicht kann durch eine Beimischung von Mangan und/oder Chrom und/oder gleichwirkender Legierungselemente zum Werkstoff erreicht werden.

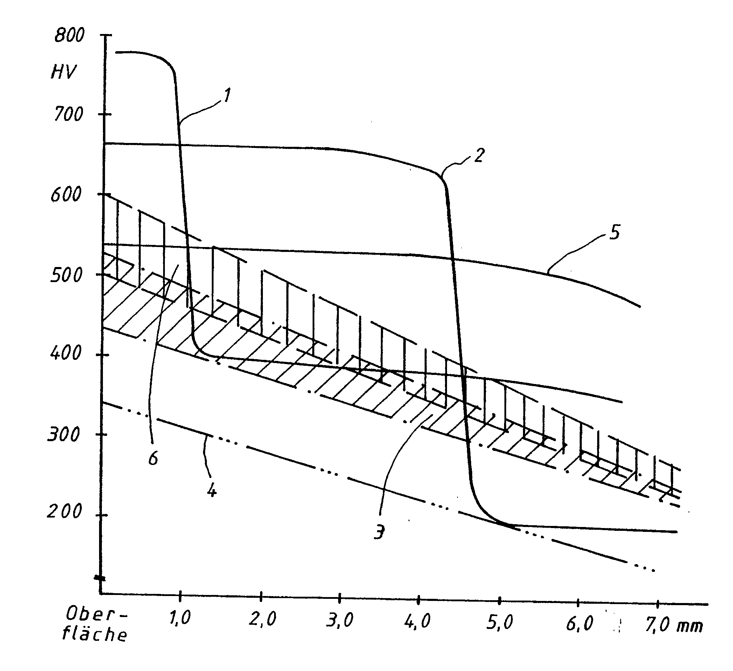

In der Figur wird der Härteverlauf einer Antriebswelle gemäß dem genannten Verfahren im Vergleich zu bekannten Durchhärtungskennlinien bei induktiver Randschichthärtung gezeigt.

In der Figur ist der Verlauf der Härtewerte als Funktion der Eindringtiefe für die bekannten Verfahren z.B. Einsatzhärten 1 oder Induktionshärtung 2 dargestellt. Der maximal zulässige Belastungsverlauf für das Einsatzhärten ist in einem Belastungsintervall 3 mit schräg-schraffierten Strich-Punkt-Linienintervall und für die Induktionshärtung durch die Belastungsgrenze in Form einer Strich-Dreipunkt-Linie angedeutet. Der Härteverlauf 5 nach einer Wärmebehandlung gemäß dem erfindungsgemäßen Verfahren ist mit einem senkrecht schraffierten durch gestrichelte Linien begrenzten Belastungsintervall 6 eingezeichnet. Die untere Grenze wird bei beiden Belastungsintervallen durch die Lastkapazität des Werkstoffes bestimmt und die obere Grenze wird durch den Abbau der unterschiedlichen Druckvorspannungen in der äußeren Wellenschicht erreicht. Es zeigt sich ein wesentlich höherer Belastungsverlauf nach dem erfindungsgemäßen Verfahren und zudem ist der Werkstoff an der Oberfläche nicht so spröde wie beim Einsatzhärten, so daß eine höhere Belastung bei geringer Eindringtiefe erzielt wird.

Bezugzeichenliste

1 Einsatzhärteverlauf
2 Induktionshärteverlauf
3 Belastungsintervall für Härtung nach 1
4 Belastungsgrenze für Härtung nach 2
5 Härteverlauf nach erfindungsgemäßem Verfahren
6 Belastungsintervall für Härtung nach 5

**Ansprüche**

1. Antriebswelle, insbesondere für einen Antriebsstrang eines Kraftfahrzeuges, die aus einem induktiv gehärteten Werkstoff besteht, dadurch gekennzeichnet, daß der Werkstoff der Antriebswelle an der Oberfläche mindestens 90% der für den betreffenden Werkstoff erreichbaren Anspring-Härte aufweist, daß der Werkstoff bis zu einer Eindringtiefe von 60% der Materialstärke mit mindestens 90% der erreichten Oberflächenhärte durchgehärtet ist, wobei der Werkstoffbereich zwischen äußerer Schicht bis zum Wellenkern einen Härtegradienten von weniger als 50 HV/mm aufweist und aus einem Martensit-Gefüge mit einem zunehmenden Anteil von Troostit- oder Bainit-Gefüge besteht, daß der Restquerschnitt einen zunehmenden Anteil von Zwischenstufen-Gefüge bis zum Wellenkern aufweist und daß der Kohlenstoffgehalt des verwendeten Werkstoffes etwa 0,2 bis 0,5 % beträgt.

2. Antriebswelle nach Anspruch 1, dadurch gekennzeichnet, daß die äußere durchgehärtete Werkstoffschicht mindestens 90 % der für den betreffenden Werkstoff erreichbaren Anspringhärte aufweist.

3. Antriebswelle nach Anspruch 1, dadurch gekennzeichnet, daß der Werkstoff über den gesamten Querschnitt eine Spannungskapazität aufweist, die größer ist als die Spannungswerte der Welle unter maximaler Torsionsbelastung.

4. Antriebswelle nach Anspruch 1, dadurch gekennzeichnet, daß weitere Beimengungen von Mangan und/oder Chrom und/oder gleich wirkender Legierungselemente zum Werkstoff unter Absenkung des notwendigen Kohlenstoffgehaltes vorgenommen werden.

5. Verfahren zur Herstellung einer Antriebswelle, insbesondere für einen Antriebsstrang eines Kraftfahrzeuges, die induktiv erwärmt wird, dadurch gekennzeichnet, daß,

a) eine Aufwärmung der Antriebswelle durch induktive Erwärmung des gesamten Querschnittes bis über die GOS-Linie im Eisen-Kohlenstoff-Diagramm vorgenommen wird,

b) eine Abkühlung der Antriebswelle durch eine Wasser- oder Wasser-Emulsions-Dusche derart vorgenommen wird, daß der Werkstoff der Antriebswelle an der Oberfläche mindestens 90% der für den betreffenden Werkstoff erreichbaren Anspring-Härfe aufweist, und daß der Werkstoff bis zu einer Eindringtiefe von 60% der Materialstärke mit mindestens 90% der erreichten Oberflächenhärte durchgehärtet ist, und daß der Restquerschnitt einen zunehmenden Anteil von Zwischenstufengefüge bis zum Rohrinnendurchmesser aufweist.

c) für die Znduktionshärtung ein Werkstoff verwendet wird, der bezüglich des C-Gehaltes dem eines für das Einsatzhärten gebräuchlichen Werkstoffes entspricht.

6. Verfahren nach Anspruch 5, dadurch gekennzeichnet, daß eine Erniedrigung der möglichen kritischen Abkühlgeschwindigkeit durch eine Beimischung von Mangan und/oder Chrom oder gleichwirkender Legierungselemente zum Werkstoff erreicht wird.

7. Verfahren nach Anspruch 5, dadurch gekennzeichnet, daß eine Vergrößerung der Einhärtetiefe in der äußeren Wellenschicht durch Zugabe von Chrom und/oder Mangan oder gleichwirkender Legierungselemente zum Werkstoff bei reduziertem Kohlenstoffanteil erzielt wird.

Europäisches
Patentamt

EUROPÄISCHER
RECHERCHENBERICHT

Nummer der Anmeldung

EP 90 11 9573

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 332 284   (DANA CORP.)<br>* Patentansprüche 1,10-17; Seite 4 *<br>– – – | 1,4,5-7 | C 21<br>D 9/28 |
| A | US-A-4 173 501   (J.A. HILDEBRANDT et al.)<br>– – – | | |
| A | US-A-3 024 626   (F.A. FRISCHMAN)<br>– – – | | |
| A | PATENT ABSTRACTS OF JAPAN, Band 11, Nr. 8<br>(C-396)[2455], 9. Januar 1987;<br>& JP-A-61 186 419 (TOYOTA) 20-08-1986<br>– – – | | |
| A | METAL PROGRESS, Band 127, Nr. 2, Februar 1985, Seiten<br>49-52; F.A. FETT: "Induction case depths for torsional appli-<br>cations"<br>– – – – – | | |

| RECHERCHIERTE SACHGEBIETE (Int. Cl.5) |
|---|
| C 21 D |

Der vorliegende Recherchenbericht wurde für alle Patentansprüche erstellt

| Recherchenort | Abschlußdatum der Recherche | Prüfer |
|---|---|---|
| Den Haag | 01 Februar 91 | MOLLET G.H.J. |